# FASCICULE DE BREVET EUROPEEN

(11) **EP 0 912 018 B1**
(45) Date de publication et mention de la délivrance du brevet: **03.12.2008**
(21) Numéro de dépôt: 98402612.0
(22) Date de dépôt: 20.10.1998
(51) Int. Cl.: H04L 12/56

(54) **Procédé de contrôle de flux au sein d'un commutateur ATM à architecture répartie**
Verfahren zur Flusssteurung in einer ATM-Vermittlungsstelle mit verteilter Architektur
Method of flow control inside an ATM switch having a distributed architecture

(30) Priorité: 20.10.1997 FR 9713100
(43) Date de publication de la demande: 28.04.1999
(73) Titulaire: Remote Access, LLC, Los Altos CA 94022 (US)
(72) Inventeur: Delattre, Michel, 94117 Arcueil Cedex (FR); Bavant, Marc, 94117 Arcueil Cedex (FR); Guerin, Didier, 94117 Arcueil Cedex (FR); Herau, Philippe, 94117 Arcueil Cedex (FR)
(74) Mandataire: Weber-Bruls, Dorothée

(56) Documents cités:
- EP-A- 0 772 325
- MARK B L ET AL: "LARGE CAPACITY MULTICLASS ATM CORE SWITCH ARCHITECTURE" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, vol. VOL. 1, 21 septembre 1997, pages 417-423, XP000720547 ABE S ET AL
- BRIEM U ET AL: "TRAFFIC CONTROL FOR AN ATM SWITCH WITH PER VC QUEUING: CONCEPT AND IMPLEMENTATION" ISS '97. WORLD TELECOMMUNICATIONS CONGRESS. (INTERNATIONAL SWITCHIN SYMPOSIUM), GLOBAL NETWORK EVOLUTION: CONVERGENCE OR COLLISION? TORONTO, SEPT. 21 - 26, 1997, vol. VOL. 1, 21 septembre 1997, pages 409-415, XP000720546 ABE S ET AL

## Description

La présente invention concerne un procédé de contrôle de flux pour les connexions non temps réel point à point, point à multipoint, multipoint à point et multipoint à multipoint au sein d'un commutateur ATM à architecture répartie et mémorisation en entrée.

Les réseaux de communication connus sous l'abréviation anglo-saxonne ATM de « Asynchronous Transfer Mode » permettent la circulation de paquets de longueur fixe dénommés « cellules ATM », constitués d'un en-tête de cinq octets et d'un corps de quarante-huit octets. L'en-tête contient notamment un identificateur de voie logique, dénommé champ VPI/VCI, abréviation anglo-saxonne pour « Virtual Path Identification et Virtual Channel Identifier » qui permet l'aiguillage de la cellule dans les commutateurs qu'elle rencontre sur son chemin entre l'usager émetteur et l'usager destinataire.

Les applications pouvant utiliser les réseaux ATM pour la communication de leurs données sont très diverses. La plupart des applications susceptibles d'utiliser les réseaux ATM ont un format propre pour leurs données : il peut s'agir, par exemple, de trames au format IP du protocole « INTERNET » ou bien de trames au format de la norme MPEG, où MPEG est l'abréviation anglo-saxonne de « Moving Picture Expert Group ». L'adaptation entre le format des trames applicatives et le format des cellules ATM s'effectue dans une couche appelée couche d'adaptation, désignée sous l'abréviation AAL de « ATM Adaptation Layer », cette couche étant notamment chargée de segmenter les trames en cellules et inversement de réassembler en trames les cellules reçues du réseau.

Certains des flux de données transportés, dénommés « flux temps-réel » requièrent que la durée de transit et la gigue auxquelles le réseau soumet leurs cellules soient minimales. Ce cas concerne par exemple les données téléphoniques. D'autres flux de données, dénommés ci-après « flux non temps-réel », par exemple, le courrier électronique, n'ont pas ces contraintes. Les flux temps-réel doivent bénéficier d'une certaine priorité au sein du réseau et, pour ce faire, ils font l'objet d'un mécanisme de contrôle de congestion préventif par réservation de ressources.

Plusieurs grandes classes de flux dénommées « catégories de services » sont définies dans les normes ([UIT-T.I.371], [AF TM4.0]) pour tenir compte des différentes exigences exprimables par les usagers sur la qualité de service qu'ils désirent pour un flux donné, déterminées par des paramètres de qualité de services, tels que : taux de perte de cellules, durée de transfert, gigue, débit minimum, etc., et pour tenir compte des différentes caractéristiques du débit de ce flux, constituées par des paramètres de trafic, tels que : débit crête, débit moyen, taille maximum d'une rafale, etc.

Les flux temps-réel entrent dans l'une des catégories connues sous les abréviations anglo-saxonnes CBR de « Constant Bit Rate » ou VBRrt de « Variable Bit rate - real time ». Les flux non temps-réel entrent dans l'une des catégories suivantes connues sous les abréviations anglo-saxonnes UBR de « Unspecified Bit Rate » dont la qualité de service ne fait l'objet d'aucune exigence de la part de l'usager, VBRnrt de « Variable Bit rate - non-real time » dont les caractéristiques statistiques sont connues avec suffisamment de précision pour permettre une garantie sur le taux de perte, ou ABR de « Available Bit Rate pour lequel est garanti un débit minimum et un taux de perte faible en contrepartie d'un contrôle de flux de bout en bout selon les indications du réseau.

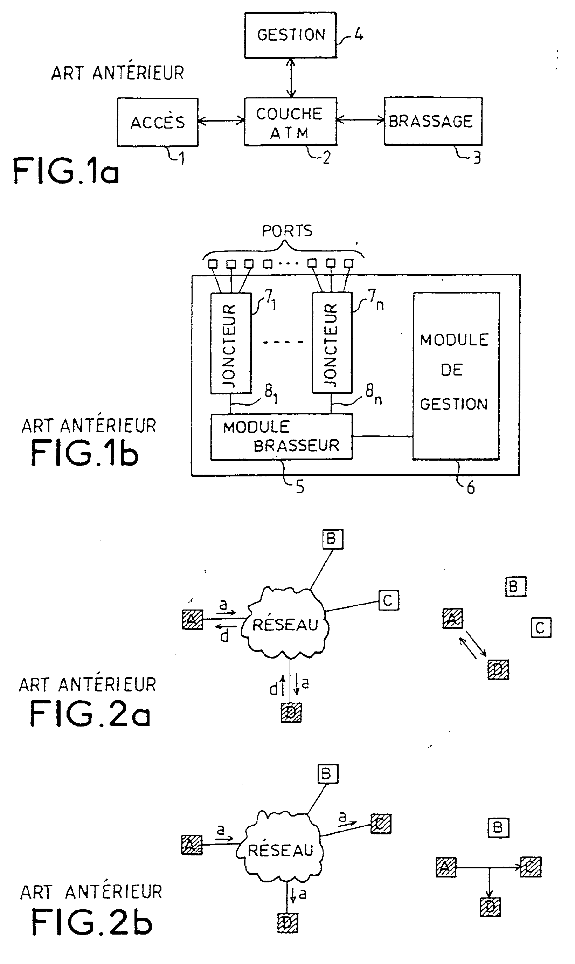

Tout commutateur ATM met en oeuvre, de la façon représentée à la figure 1a, quatre grands ensembles de fonctions, une fonction d'accès 1 à chaque port d'un commutateur ATM, une fonction de couche ATM 2, une fonction de brassage 3 et une fonction de gestion 4.

La fonction d'accès 1 assure la conversion des cellules ATM dans le format qui convient au support de transmission raccordé audit port et réciproquement. Cette fonction permet de présenter les cellules entrantes, à la couche ATM, sous un format unique qui est indépendant du débit nominal et de la technologie optique, électrique, radio, etc. du support de transmission dont elles proviennent. Les ports d'un commutateur permettent de raccorder plusieurs commutateurs entre eux mais ils permettent également de raccorder un usager des services ATM à un commutateur.

Les traitements à mettre en oeuvre dans la fonction d'accès sont décrits dans une abondante littérature normative, tant de l'ANSI, que de l'UIT et du Forum ATM. Les grandes classes d'interface qui sont définies dans ces documents sont :
L'interface PDH, abréviation anglo-saxonne de « Plesiochronous Digital Hierarchy », définie dans le document UIT-T G.804, G.703.
L'interface SDH, abréviation anglo-saxonne de « Synchronous Digital Hierarchy », définie dans le document UIT-T G.708, etc.
L'interface SONET, abréviation anglo-saxonne de « Synchronous Optical Network », définie dans le document ANSI-T 1.105, etc.
L'interface IBM 25,6 Mbit/s définie dans le document af-phy-0040.000.

La fonction de couche ATM 2 regroupe plusieurs fonctions comme notamment la gestion des en-têtes de cellules, la traduction des voies logiques VPI/VCI, abréviations anglo-saxonnes de « Virtual Path Identification et Virtual Channel Identifier », le traitement de cellules de gestion OAM, abréviation anglo-saxonne de « Operations Administration and Maintenance », une partie importante de la gestion des trafics connue sous l'appellation anglo-saxonne de « Traffic management », qui comprend les sous-fonctions connues sous les abréviations anglo-saxonnes UPC de « Usage Parameter Control », SCD de « Selective Cell Discard », EPD de « Early PDU Discard », cellules RM de « Resource Management », etc.

Les traitements à mettre en oeuvre dans la fonction couche ATM sont décrits notamment dans les documents normatifs de l'UIT et du Forum ATM suivants :
- B-ISDN ATM Layer Specification [UIT-T I.361]
- B-ISDN Operation and Maintenance Principles and Functions [UIT-TI.610]
- Traffic Management Specification Version 4.0 [AF-TM 4.0]

La fonction de brassage 3 commute les cellules d'une direction d'entrée vers une ou plusieurs directions de sortie, en fonction d'indications élaborées par la couche ATM lors de la traduction de voies logiques.

Cette fonction est au coeur de tout commutateur ATM et elle a fait l'objet d'une abondante littérature qu'il n'est pas utile de rappeler ici. L'anneau de brassage et le réseau de brassage constituent deux types fréquents de mise en oeuvre de cette fonction.

La fonction de gestion 4 comprend des sous-fonctions telles que : la supervision locale du commutateur (alarmes, découverte de la configuration du commutateur et de la topologie locale, gestion des versions, etc.), le dialogue avec la supervision centralisée du réseau, les dialogues nécessaires à l'établissement de circuits virtuels commutés, etc.

Pour une description plus détaillée de certaines de ces sous-fonctions, on se rapportera par exemple à la littérature normative du Forum ATM :
- ATM User-Network Interface (UNI) Signaling Specification Version 4.0 (af-sig-0061.000)
- Private Network-Network Interface Specification Version 1.0 (af-pnni-0055.000)
- Integrated Layer Management Interface (af-ilmi-0065.000)

Ces différentes fonctions s'interfacent entre elles comme indiqué ci-après. Il est à noter que la fonction de gestion se comporte exactement comme un usager si ce n'est que son raccordement à la couche ATM ne passe pas par un port externe du commutateur, et, donc, ne nécessite pas de fonction d'accès. En revanche, la fonction de gestion ne traite pas que des cellules ATM mais également des messages qu'il lui faut donc segmenter et réassembler par l'intermédiaire d'une couche d'adaptation AAL qui constitue donc une fonction supplémentaire : la fonction d'adaptation.

Les commutateurs ATM sont souvent des commutateurs à architecture centralisée, ou faiblement distribuée, c'est-à-dire que les fonctions propres du commutateur sont effectuées par un organe matériel unique qui regroupe des capacités de calcul composées de microprocesseurs, des capacités de stockage composées de mémoire et des capacités d'aiguillage des cellules dans le brasseur. Cependant, cette concentration nuit à la modularité du commutateur et à sa capacité de rester fonctionnel quand un des éléments qui le composent tombe en panne.

Une solution classique consiste à répartir les fonctions sur des organes matériels distincts, éventuellement dupliqués pour permettre le secours d'un organe défaillant de même nature, et implantés dans le commutateur en nombre suffisant pour satisfaire la charge de traitements prévisible en fonction de la configuration du réseau à cet endroit. En pratique, ces organes sont des cartes à composants électroniques, réunies dans un panier, et dialoguant entre elles par un ou plusieurs bus de données aménagés en fond de panier. Ils définissent ce qui est communément appelé une « architecture répartie ».

Traditionnellement, l'architecture matérielle d'un commutateur ATM réparti distingue, comme le montre la figure 1b, trois types de modules : un module brasseur 5, un module de gestion 6 et des modules joncteurs 7₁ ... 7ₙ. Les fonctions du commutateur se distribuent sur ces différents modules avec toutefois la contrainte que les modules joncteurs traitent au moins la fonction d'accès, le module brasseur 5 la fonction de brassage et le module de gestion 6 la fonction de gestion.

Sur la figure 1b, les liens 8₁ ... 8ₙ existant entre chaque module joncteur et le module brasseur s'appellent « jonctions brasseur ». Par ailleurs, chaque joncteur met en oeuvre une fonction d'accès capable de gérer un ou plusieurs ports. Quand une cellule traverse un commutateur, elle commence par traverser un premier joncteur, dit « joncteur d'entrée » pour cette cellule, puis un second joncteur, dit « joncteur de sortie ». Comme plusieurs joncteurs d'entrée peuvent simultanément envoyer des cellules vers un même joncteur de sortie, il peut se produire un encombrement de cellules du fait du débit de sortie limité de ce joncteur de sortie. Des mécanismes de stockage et de mise en file d'attente des cellules sont alors enclenchés en attendant la résorption de l'encombrement. Ces mécanismes de stockage peuvent se trouver en entrée, en sortie, dans le brasseur ou dans plusieurs de ces éléments à la fois. On parle alors d'architecture avec « mémorisation en entrée », « mémorisation en sortie », etc.

Les usagers d'un réseau de communications peuvent envisager plusieurs modes d'échange de leurs données. Ceux-ci sont représentés schématiquement sur les figures 2a à 2f. Le mode point à point, figure 2a, met en relation deux usagers A, D exclusivement, chacun d'eux pouvant être émetteur et récepteur. Dans ce mode, tout ce qu'émet l'un des usagers est reçu par l'autre. Une variante du mode point à point consiste à spécialiser les rôles d'émetteur ou récepteur de chacun des deux usagers (communication point à point unidirectionnelle).

Le mode point à multipoint, figure 2b, met en relation plus de deux usagers, A, C, Ddont l'un est exclusivement émetteur et les autres sont exclusivement récepteurs. Tout ce qui est émis par l'émetteur est reçu par tous les récepteurs.

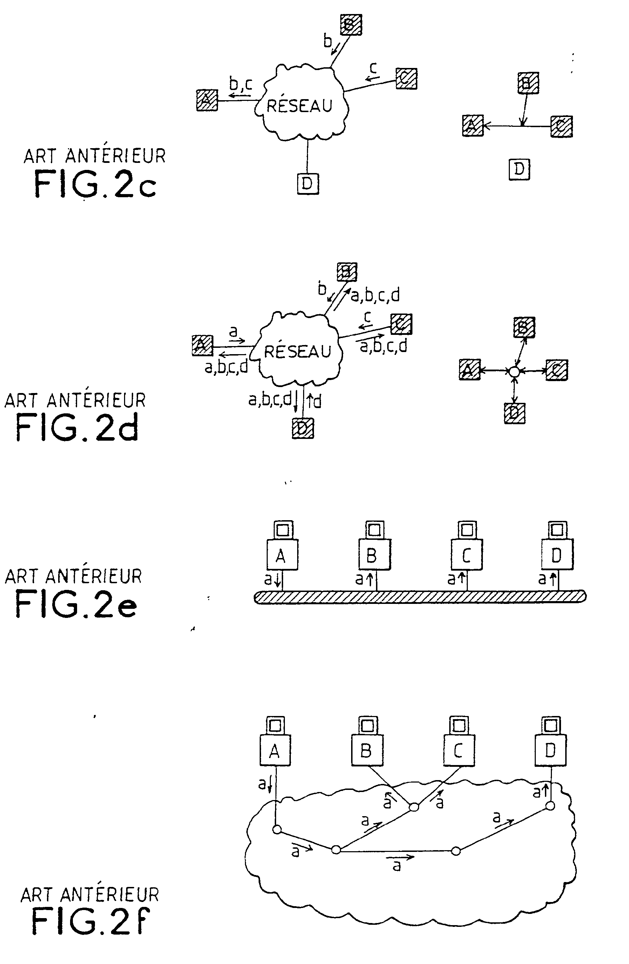

Le mode multipoint à point, figure 2c, met également en relation plus de deux usagers, A, B, C dont l'un est exclusivement récepteur et les autres sont exclusivement émetteurs. Tout ce qui est émis par l'un des émetteurs est reçu par le récepteur.

Enfin, le mode multipoint à multipoint, figure 2d, met en relation au moins deux usagers, A, B, C, D chacun pouvant être émetteur et récepteur. Dans ce dernier mode, tout ce qui est émis par l'un quelconque des usagers est reçu par tous les autres usagers et aussi par l'émetteur.

Les communications multipoint à multipoint et point à multipoint sont particulièrement naturelles dans le cas d'un réseau de communication à médium partagé tel que les réseaux Ethernet comme représenté schématiquement figure 2e. En effet, dans ce cas, tous les usagers sont reliés à un médium unique et toutes les stations connectées A, B, C, D à ce médium reçoivent tous les messages envoyés par les autres stations. Au contraire, dans le cas d'un réseau ATM, comme représenté schématiquement figure 2f la diffusion à des destinataires multiples A, B, C, D d'une cellule émise par un des usagers nécessite que le réseau engendre lui-même les copies de la cellule en question.

On appelle « connexion » toute communication selon l'un des modes définis plus haut, entre un ensemble bien défini d'usagers, cette communication étant dotée d'une liste précise d'attributs tels que : paramètres de qualité de service, paramètres de trafic, etc.

La mise en oeuvre au sein d'un réseau ATM de communications dans les différents modes définis ci-dessus peut être vue de plusieurs points de vue, notamment : signalisation, routage, acheminement des données et gestion des ressources.

En ce qui concerne les connexions point à point, les aspects de signalisation et de routage sont abondamment décrits dans les documents ([UIT-T Q.2931], [AF-SIG 4.0], [AF-PNNI1.0], [AF-IISP]) de la littérature normative.

Ils consistent à déterminer dans le réseau un chemin entre les deux usagers, tel que ce chemin satisfasse aux contraintes de qualité de service et de trafic de la connexion. Le chemin est caractérisé par une liste d'artères. Chaque commutateur du chemin attribue à la connexion un numéro de voie logique relatif à l'artère d'entrée de la connexion dans le commutateur et entretient une table de traduction qui, à cet identificateur, fait correspondre la direction sortante que la cellule doit emprunter et l'identificateur de voie logique de la connexion dans le commutateur suivant. Ainsi toute cellule d'une connexion peut être aiguillée de proche en proche uniquement en consultant l'identificateur de voie logique présent dans l'en-tête de cellule et la table locale de traduction.

Dans un commutateur à architecture répartie, tel celui de la figure 1b, cette traduction peut être effectuée par la fonction de couche ATM du joncteur d'entrée. La cellule est ensuite remise au module brasseur avec une indication de la jonction brasseur de sortie vers laquelle le brasseur doit commuter la cellule. Cette indication peut être convoyée dans un en-tête spécifique rajouté en début de cellule. Des dispositifs de traduction conformes à ce cas de figure ont été décrits par la Demanderesse, par exemple dans les demandes brevets français N° 2 670 972, 2 681 164, 2 726 669 et de la demande de brevet FR 97 07355 non encore publiée. Un autre dispositif est décrit dans le brevet EP 0 772 325.

En ce qui concerne l'aspect de gestion des ressources, plusieurs cas sont possibles suivant la catégorie de service de la connexion.

Les flux temps réel, c'est-à-dire les connexions CBR et VBRrt font l'objet d'une réservation préventive de ressources. La probabilité d'encombrement d'un joncteur de sortie à cause des flux temps réel est donc faible. Aussi n'est-il généralement pas utile de prévoir des mémoires de stockage en entrée. En revanche, une mémoire de stockage de petite taille en sortie est nécessaire pour absorber les cellules provenant simultanément de plusieurs entrées.

Les flux non temps réel avec garantie de qualité de service c'est-à-dire les connexions VBRnrt ou ABR peuvent faire l'objet de certaines mesures de réservation préventive mais ces mesures sont insuffisantes étant donnée la nature fortement sporadique des sources VBRnrt et la tendance des sources ABR à occuper l'ensemble de la bande passante disponible. Pour ces flux, il faut donc prévoir des mémoires de stockage temporaire, étant entendu que ce type de flux garantit par sa nature statistique pour les connexions VBRnrt ou par son contrôle de flux de bout en bout pour les connexions ABR que le débit total des sources reste en moyenne inférieur ou égal au débit disponible.

Pour les flux non temps réel sans garantie de qualité de service c'est-à-dire les connexions UBR aucun mécanisme préventif n'est possible. Il faut donc prévoir aussi des mémoires de stockage et partager cet espace entre les différentes connexions en évitant qu'une connexion n'accapare trop d'espace disponible (notion d'équité). Il faut aussi éviter que le traitement des connexions UBR puisse gêner l'écoulement des flux à qualité de service garantie.

Ce dernier point prend toute son importance par le fait que la plupart des commutateurs ATM existants instaurent une mise en commun des ressources entre tous les types de flux. C'est notamment vrai des capacités de brassage. Mais c'est également le cas des capacités de mémorisation car il n'est pas avantageux de segmenter la mémoire disponible en fonction de la catégorie de service. Il appartient donc au commutateur de mettre en oeuvre un mécanisme de contrôle de flux permettant d'éviter tout encombrement en aval (le joncteur de sortie appliquant une rétroaction aux joncteurs d'entrée pour réguler leur débit), mécanisme qui ne doit pas entraver les flux à qualité de service garantie. Par ailleurs, ce mécanisme ayant tendance à déplacer l'encombrement de l'aval vers l'amont, il appartient à la fonction de gestion du trafic, sous-fonction de la fonction de couche ATM de rejeter les cellules qui violent la politique d'allocation des ressources de mémorisation en amont.

La demande de brevet français N° 2 740 283 déposée au nom de la Demanderesse présente un exemple de tel mécanisme de contrôle de flux dans sa figure 1. Il est souvent associé à ce mécanisme de base des mécanismes complémentaires de suppression de blocage en tête de ligne connus sous l'appellation de « head-of-line blocking » en anglais, basés sur des files d'attentes spécifiques dans la mémoire d'entrée en fonction de la jonction sortante. Dans la pratique ces mécanismes s'avèrent presque indispensables eu égard aux flux à qualité de service garantie. Différents exemples de tels mécanismes sont présentés ou référencés dans un article HPC ASIA 97 de M. HYOJEONG SONG intitulé « A simple and fast scheduler for input queued ATM switches ».

Symboliquement, les connexions point à multipoint peuvent être représentées par un « arbre » avec une « racine » représentant l'usager émetteur et ses « feuilles » représentant les usagers récepteurs. La mise en oeuvre de ce type de connexions est normalisée en ce qui concerne la signalisation et le routage. Il s'agit simplement de former une connexion point à multipoint en créant d'abord une connexion point à point, puis en lui greffant de nouvelles feuilles. Cette adjonction de feuilles peut se faire à l'initiative de la racine ou bien de la feuille.

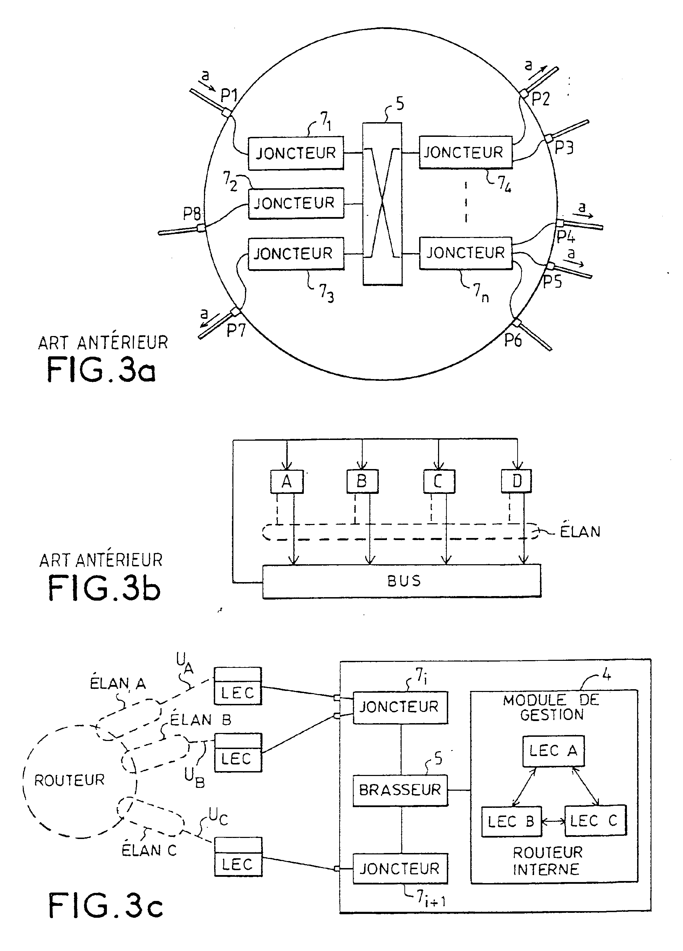

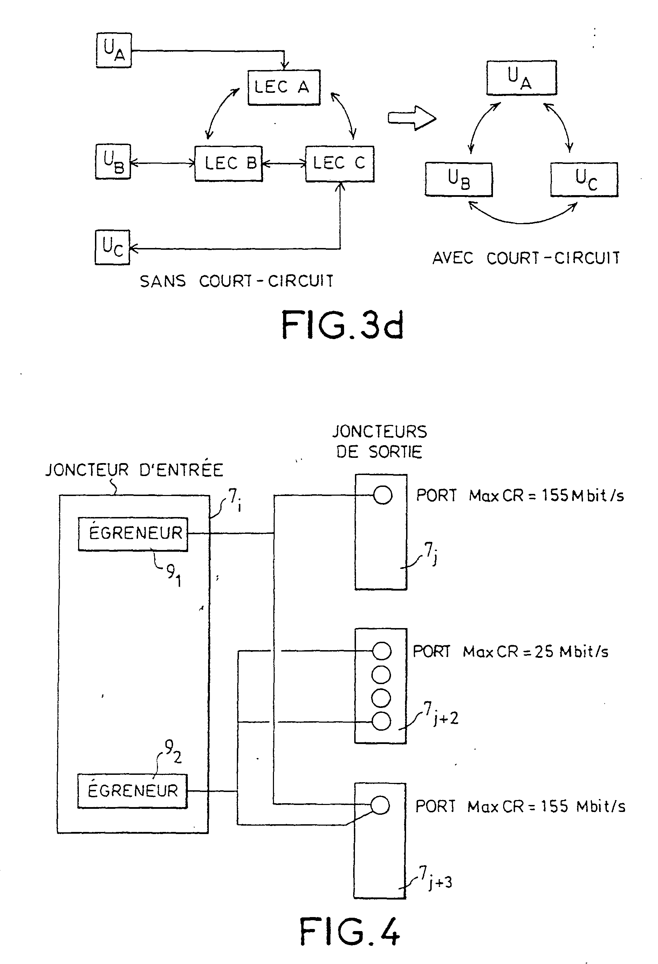

En ce qui concerne l'acheminement des cellules, le modèle de la connexion point à point, c'est-à-dire la traduction d'entrée seule, ne peut pas toujours s'appliquer. Sur la figure 3a où les éléments homologues à ceux de la figure 1b sont repérés avec les mêmes références, il est représenté une connexion point à multipoint. Cette connexion entre dans le commutateur par un port P1 et en sort par les ports P2, P4, P5, P7. Dans ce cas, la traduction d'entrée envisagée plus haut peut ordonner au brasseur 5 de copier chaque cellule de cette connexion vers les trois jonctions brasseurs concernées (7₃, 7₄, 7ₙ) mais elle n'est pas capable d'indiquer les ports de sortie sur lesquels la cellule doit être envoyée. Pour ce faire, il y a lieu de rajouter cette information dans les tables de traduction et de la convoyer de l'entrée jusqu'à la sortie. Par ailleurs, la voie logique de sortie dépend de chaque port de sortie et il ne peut pas être attribué une voie logique unique pour toutes les sorties.

Pour toutes ces raisons, il est généralement préféré de faire une double traduction : une traduction d'entrée qui remplace la voie logique de la cellule par un « index de diffusion » représentatif de la connexion au sein du commutateur, puis une deuxième traduction en sortie qui traduit l'index de diffusion en une liste de couples de la forme (port, voie logique) avec les recopies éventuellement nécessaires.

En ce qui concerne la gestion des ressources pour les flux non temps réel, en revanche, il est difficile d'espérer une simple extension des mécanismes de contrôle de flux mis en oeuvre pour les connexions point à point. En effet, les mécanismes de suppression du blocage en tête de ligne, grâce à des files d'attente spécifiques à chaque sortie, imposeraient de gérer autant de files d'attente que d'ensembles possibles de sorties c'est-à-dire 2^{N}-1 dans le cas de N jonctions brasseur.

Une autre solution peut consister, par exemple, à effectuer dans le joncteur d'entrée une copie de chaque cellule en autant d'exemplaires que de joncteurs de sortie concernés par cette cellule. Cette solution aurait l'inconvénient rédhibitoire de nécessiter N cycles de brasseur pour transmettre une cellule vers N jonctions de sortie, alors que la technologie des brasseurs permet généralement d'effectuer le transfert d'une cellule vers N sorties en un seul cycle.

En revanche, la demande de brevet français N° 2 740 283 citée précédemment décrit une solution unique basée sur la transformation locale des différents flux UBR/ABR point à multipoint en un flux unique CBR point à multipoint grâce à un égrenage des émissions du joncteur d'entrée vers le brasseur et grâce à une réservation forfaitaire de ressources sur tous les ports de sortie, le niveau de réservation étant fixé d'après le débit imposé par l'égreneur.

Cependant, cette solution présente des inconvénients lorsque les ports de sortie ont des débits très différents les uns des autres, ce qui est aisément le cas dans un commutateur ATM où peuvent coexister des ports à 25 Mbit/s et des ports à 622 Mbit/s. En effet, dans ce cas, il faudrait régler le débit de l'égreneur en se basant sur le débit du port de plus faible débit. Comme toutes les connexions ABR/UBR utilisent le même égreneur, il en résulte un étranglement de toutes ces connexions, même de celles qui n'empruntent que des ports de sortie à haut débit.

Les connexions multipoint à point et multipoint à multipoint ne sont pas pour l'heure traitées dans les organes de normalisation s'occupant de l'ATM. Il n'y a donc pas pour l'instant de signalisation ni de routage défini pour ce type de connexions.

En termes d'acheminement des cellules, toute topologie de communication amenant des données de différentes origines géographiques à converger vers un même lien pose le problème dit d'« entrelacement des trames applicatives PDUs », PDU étant l'abréviation anglo-saxonne de « Protocol Data Unit». En effet, les trames applicatives (PDUs) étant segmentées par la couche AAL en cellules, les cellules de différentes trames arrivent entrelacées au destinataire. Pour réassembler les trames, le destinataire devrait pouvoir retrouver à quelle trame appartient chaque cellule. Or, le mécanisme de segmentation le plus couramment utilisé dans les connexions UBR, mis en oeuvre dans la couche d'adaptation AAL 5, ne permet pas cette identification. Il ne permet que l'identification de la dernière cellule de la trame PDU, ce qui suffit dans les modes point à point ou point à multipoint car les cellules ATM sont transmises en séquence.

Pour les commutateurs à architecture centralisée ou à mémorisation en sortie, il est possible de se satisfaire d'une solution qui consiste à retenir en mémoire les cellules d'une même trame PDU et à les envoyer toutes ensemble quand la trame PDU est complètement reçue. Il n'en est pas de même pour les commutateurs à mémorisation d'entrée car l'accès simultané au brasseur partagé par les différents joncteurs d'entrée introduit nécessairement un nouvel entrelacement des cellules si l'émission des différents joncteurs n'est pas coordonnée.

En dépit de tous ces problèmes, des besoins de communications en mode multipoint à point et multipoint à multipoint existent. Ils pourraient être traités théoriquement par superposition de connexions point à point ou point à multipoint. Le cas apparaît notamment dans le cadre de l'émulation de réseau local connu sous les abréviations anglo-saxonnes LAN Emulation ou LANE de « Local Array Network Emulation », où tout un mécanisme sophistiqué est mis en place pour émuler un médium partagé (ELAN) au sein d'un réseau ATM [AF LANE]. On peut citer à titre d'exemple un serveur connu sous l'abréviation anglo-saxonne BUS de « Broadcast or Unknown Server » qui est défini dans la norme LANE, et dont l'architecture est montrée figure 3b, qui sert à un usager pour transmettre des messages en diffusion vers tous les usagers d'un médium partagé émulé, ou vers un autre usager auquel il n'est pas encore directement raccordé. Chaque usager de l'ELAN possède une connexion point à point vers le serveur BUS et le serveur BUS possède une connexion point à multipoint vers tous les usagers de l'ELAN, comme indiqué dans la figure 3b. Dans l'art antérieur les serveurs de diffusion du type du serveur BUS sont mis en oeuvre soit par un matériel dédié onéreux raccordé quelque part au réseau ATM, soit par un processus spécifique s'exécutant sur le module de gestion du commutateur. Cette dernière solution n'est malheureusement pas très extensible quand le nombre d'usagers de l'ELAN croît. En effet, pendant le temps où un nouvel usager n'est pas connu de ses partenaires, les messages qu'il envoie et qu'il reçoit doivent transiter par le serveur BUS ce qui est souvent la cause d'un engorgement qui peut être fatal au module de gestion.

Un autre exemple de besoin en communications multipoint à point et multipoint à multipoint est fourni par l'émulation de routage entre réseaux locaux. Cette fonction peut notamment être mise en oeuvre suivant la norme connue sous l'abréviation anglo-saxonne MPOA de « Multiprotocol Over ATM » du Forum ATM qui permet d'effectuer un routage virtuel entre différents réseaux locaux émulés (ELANs) ou différents réseaux locaux virtuels (VLANs) d'un ELAN [AF MPOA]. Une autre façon d'effectuer l'émulation de routage consiste à embarquer un logiciel de routage dans l'unité de gestion du commutateur ATM. Dans ce contexte, un routeur virtuel est assimilable à un usager des différents ELANs qu'il interconnecte. A ce titre, il doit héberger une fonction, connue sous l'abréviation anglo-saxonne LEC de « LAN Emulation Client », pour chaque ELAN. Le routeur virtuel doit être mis en oeuvre dans un commutateur, par exemple par un processus spécifique s'exécutant dans le module de gestion, ce qui risque d'engorger ledit module lorsque les échanges entre ELANs sont suffisamment soutenus.

Le but de l'invention est de pallier les inconvénients précités.

A cet effet, l'invention a pour objet un procédé de contrôle de flux au sein d'un commutateur ATM à architecture répartie et mémorisation en entrée caractérisé en ce qu'il consiste à distribuer sur chaque joncteur d'entrée un nombre déterminé n d'égreneurs, un égreneur étant dédié aux flux de catégorie VBRnrt (Variable Bit Rate non real time) et réglé en fonction du débit moyen cumulé, et les n-1 autres étant dédiés aux flux ABR et UBR et réglés en fonction du débit disponible (AvCR) des ports de sortie.

D'autres caractéristiques et avantages de l'invention apparaîtront à l'aide de la description qui suit faite en regard des dessins annexés qui représentent :
- la figure 1a, un schéma de principe d'un commutateur ATM selon l'art antérieur,
- la figure 1b, un schéma de principe d'un commutateur ATM à architecture répartie selon l'art antérieur,
- les figures 2a à 2f, des schémas illustrant des modes de communications entre usagers d'un réseau ATM,
- la figure 3a un exemple d'aiguillage d'une cellule ATM dans un commutateur lors d'une connexion point à multipoint,
- la figure 3b, un exemple de superposition de connexions point à point ou point à multipoint dans une architecture LAN émulée,
- la figure 3c, un schéma de principe de routage entre ELANs,
- la figure 3d, un principe de court circuit mis en oeuvre par l'invention,
- la figure 4, un schéma de principe d'affectation d'arbres à des égreneurs selon l'invention,
- la figure 5a, un exemple illustrant une mise en classe d'égreneurs selon l'invention,
- la figure 5b, 5c et 5d un exemple de diffusion de jetons selon l'invention,
- les figures 6a à 6d, des exemples de mise en oeuvre d'un serveur de diffusion selon l'invention.

Le procédé selon l'invention pallie les inconvénients de l'art antérieur cité plus haut dans le cas de connexions point à multipoint, en mettant en oeuvre, de la manière représentée à la figure 4, sur chaque joncteur d'entrée 7ᵢ non plus un égreneur mais plusieurs égreneurs 9₁ à 9ₙ. Plus précisément, un égreneur est dédié aux flux temps réel de catégorie VBRnrt. Le débit de cet égreneur est réglé en fonction du débit moyen cumulé des flux VBRnrt. Un nombre fixe n-1 d'égreneurs dédié aux flux UBR/ABR est réglé en fonction du débit disponible (AvCR) des ports de sortie.

A chacun des égreneurs UBR/ABR repéré par son numéro, est affectée une plage de fonctionnement.

Les plages de fonctionnement caractérisent les valeurs de débit qu'un égreneur peut réaliser. Ce sont des intervalles de débit (par exemple : de 8 à 32 Mbit/s). Les plages de fonctionnement des différents égreneurs 9₁ à 9ₙ sont attribuées de façon définitive à l'initialisation du système et de façon telle que l'ensemble de la gamme des débits nominaux des ports de sortie est couverte. La plage de fonctionnement d'un égreneur de rang 1+1 à une borne inférieure inférieure à la borne inférieure de la plage de l'égreneur de rang i et une borne supérieure légèrement supérieure à la borne inférieure de la plage de l'égreneur de rang i de façon à réaliser un léger recouvrement des plages de fonctionnement des égreneurs adjacents.

Par exemple, il est possible d'envisager la répartition suivante dans un commutateur dont les ports de sortie ont des débits nominaux qui s'échelonnent de 64 kbit/s à 155 Mbit/s :

| numéro | plage de fonctionnement |
|---|---|
| égreneur 1 | 155 Mbit/s - 8 Mbit/s |
| égreneur 2 | 32 Mbit/s - 2 Mbit/s |
| égreneur 3 | 8 Mbit/s - 64 kbit/s |

A chaque connexion point à multipoint est associé un « arbre » constitué par la donnée de son joncteur d'entrée (« racine ») et de ses ports de sortie (« feuilles »). (Ne pas confondre ici cette terminologie avec la terminologie précédente utilisée dans la description de l'art antérieur où « racine » et « feuille » s'appliquent à des usagers). Au fur et à mesure de la vie de la connexion, l'arbre qui lui est associé peut se modifier par adjonction ou suppression de feuilles.

Selon l'invention, à chaque arbre est associé un égreneur qui traite les cellules de toutes les connexions point à multipoint associées à cet arbre. Le choix de l'égreneur se fait en fonction du débit nominal du port « feuille » de plus faible débit nominal, avec une loi d'affectation à la portée de l'homme de l'art. Dans le cadre de l'exemple ci-dessus il peut être décidé que :
- les arbres dont tous les ports « feuilles » ont un débit nominal de 155 Mbit/s seront affectés à l'égreneur 1,
- les arbres qui n'entrent pas dans la catégorie précédente et dont aucun port « feuille » n'a un débit nominal, inférieure à 25 Mbit/s seront affectés à l'égreneur 2,
- les arbres qui n'entrent pas dans les deux catégories précédentes seront affectés à l'égreneur 3.

De cette façon, chaque connexion point à multipoint se trouve affectée à un égreneur, cette affectation étant révisable à chaque modification à l'arbre de la connexion.

Si l'affectation des connexions aux égreneurs 9₁ à 9ₙ est faite en fonction du débit nominal des feuilles, le réglage du débit des égreneurs, en revanche, est réalisé en fonction du débit disponible des feuilles, le débit disponible étant la différence entre le débit nominal et le débit réservé. Le débit réservé est une notion dépendante de la mise en oeuvre, qui représente le cumul des débits garantis pour les connexions CBR, VBR, ABR et même UBR si la politique du réseau conduit à garantir un débit minimum aux connexions UBR. Le débit d'un égreneur est calculé en prenant le minimum des débits disponibles des feuilles appartenant à des arbres affectés à l'égreneur concerné. La mise en oeuvre précise d'un tel mécanisme de réglage des débits d'égreneur est à la portée de l'homme de l'art. Dans le cadre de l'exemple ci-dessus, il peut être supposé par exemple que le module de gestion du commutateur tient à jour le débit disponible de chaque port de sortie qu'il envoie périodiquement à chaque joncteur d'entrée le débit à appliquer à chacun de ses égreneurs.

En ce qui concerne les égreneurs dédiés aux flux temps réel VBRnrt, ceux-ci sont réglés en fonction du débit moyen cumulé des connexions concernées.

Par l'application du mécanisme ci-dessus, à la suite de la baisse importante de débit disponible sur un ou plusieurs ports de sortie, le débit alloué à un égreneur de rang i pourrait devenir incompatible avec sa plage de fonctionnement. Afin d'éviter ce cas, il est prévu un mécanisme d'exception grâce auquel les arbres ayant pour feuilles les ports concernés seront temporairement réaffectés à un égreneur adapté à de plus bas débits, par exemple l'égreneur de rang i+1, le recouvrement des plages de fonctionnement créant un effet naturel d'hystérésis grâce auquel les changements d'affectation ne se produisent pas trop fréquemment et qui évite les changements trop fréquents d'égreneurs pour un même arbre.

Comme tous les égreneurs ABR/UBR de même numéro, situés sur des joncteurs d'entrée différents, sont susceptibles d'envoyer des cellules simultanément vers un même port de sortie, avec chacun un débit inférieur ou égal au débit disponible de ce port, il en résulte que dans le pire des cas, le débit provenant des joncteurs d'entrée peut aisément dépasser le débit disponible du port concerné. Ce problème est résolu par la mise en oeuvre d'un mécanisme d'arbitrage de l'accès des différents joncteurs à la ressource de brassage. Ce mécanisme permet également de pallier l'inconvénient de l'art antérieur cité concernant l'entrelacement des trames applicatives PDUs dû à la segmentation AAL5 dans le cadre de connexions multipoint à point ou multipoint à multipoint.

Pour ce faire, chacun des égreneurs de connexion ABR/UBR arbitre entre deux files d'attente : une file d'attente P1, prioritaire, qui fonctionne en mode trame applicative PDU, et une file d'attente P2, qui fonctionne en mode cellule. Dire qu'une file fonctionne en mode PDU signifie qu'elle n'est prête à émettre que si elle contient au moins une trame complète, et que les cellules d'une même trame sont émises en séquence sans possibilité pour des cellules d'autres trames de s'intercaler. Dire qu'une file fonctionne en mode cellule signifie qu'elle est prête à émettre dès qu'elle contient au moins une cellule.

Ensuite, sur chaque joncteur d'entrée, les connexions multipoint à point et multipoint à multipoint sont affectées à des arbres, de manière similaire à ce qui est décrit pour les connexions point à multipoint. Pour les premières, l'arbre se réduit à sa racine et à une unique feuille, pour les secondes, l'arbre prend pour racine le joncteur d'entrée considéré et pour feuilles l'ensemble des ports participant à la connexion. Les arbres seront affectés aux égreneurs suivant les mêmes principes qu'énoncé ci-dessus.

Les connexions multipoint à point et multipoint à multipoint utilisent les files d'attentes P1 car elles encourent le risque d'entrelacement des PDUs AAL5.

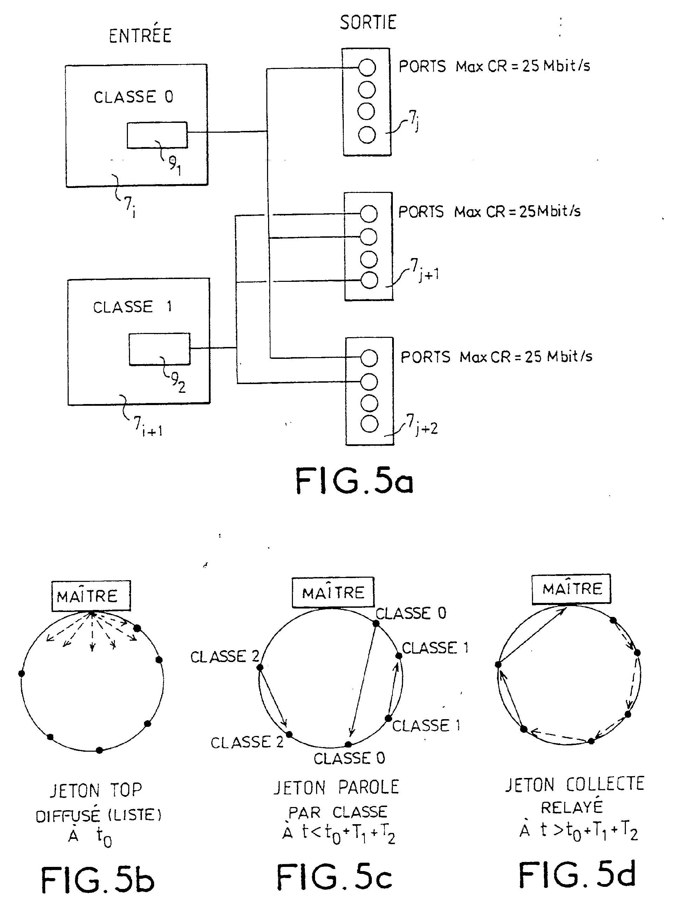

Chacun des égreneurs ABR/UBR 9₁ à 9ₙ de chaque joncteur 7ᵢ est affecté à une « classe ». Il y a une répartition en classes, c'est-à-dire une partition de l'ensemble des égreneurs de rang i donné, partition qui est différente pour chaque rang d'égreneur, c'est-à-dire pour chaque plage de fonctionnement. Les classes sont définies par le principe suivant : dans une plage de fonctionnement donné, un égreneur de cette plage est dans la même classe qu'un autre égreneur de cette plage si au moins un arbre associé au premier égreneur et au moins un arbre associé au second égreneur ont au moins une feuille commune. A contrario, deux égreneurs sont dans des classes différentes, comme le représente la figure 5a, si l'ensemble des feuilles des arbres associés à l'un d'eux a une intersection vide avec l'ensemble des feuilles des arbres associé à l'autre. Il convient de noter que cette partition est dynamique : l'affectation d'un nouvel arbre à un égreneur ou sa suppression nécessitera généralement de recalculer la partition. Chaque partition comprend au moins une classe et au plus autant de classes que de joncteurs dans le commutateur.

L'algorithme de classification des égreneurs selon le principe énoncé ci-dessus est à la portée de l'homme de l'art.

Le principe de l'arbitrage repose sur une division du temps en intervalles de longueur T = T1 + T2 + T3. Un « ordre de parole » est attribué aux divers égreneurs de la même classe. A chaque intervalle de temps T, l'égreneur de chaque classe qui a le « droit de parole » peut commencer à émettre les cellules d'une PDU extraite de la file P1 pendant l'intervalle T1. Pendant l'intervalle T2, il peut continuer à émettre les cellules d'une PDU déjà commencée mais il ne peut pas commencer à émettre une nouvelle PDU. Ce même égreneur peut émettre des cellules provenant de P2 pendant toute la durée de l'intervalle T1 + T2, à condition toutefois qu'il soit dans l'impossibilité d'émettre des cellules en provenance de P1 (principe de priorité de P1 sur P2). Si son émission est terminée avant la fin de T1 + T2, un égreneur pourra transmettre le droit de parole à un autre égreneur de sa classe, qui lui-même, pourra émettre pendant la même période. Une fois écoulé l'intervalle T1 + T2, chaque joncteur indique son désir d'émettre grâce à un mécanisme de collecte qui se déroule dans l'intervalle T3. Le tour de parole de l'intervalle T suivant sera calculé en fonction des désirs exprimés et en favorisant un égreneur qui aura dû suspendre l'émission d'une PDU avant la fin de celle-ci. L'algorithme de calcul du tour de parole peut prévoir une certaine équité entre les joncteurs si la politique de gestion du commutateur le demande. Un tel algorithme est à la portée de l'homme de l'art. Tout ce qui est dit ci-dessus est relatif à un rang i donné d'égreneur. Ainsi, par exemple, les intervalles T, T1, T2, T3 dépendent de i, c'est-à-dire de la plage de fonctionnement de l'égreneur considéré.

Une mise en oeuvre à base de jetons des principes précédents est décrite dans ce qui suit à titre d'exemple. Différentes phases de ce mécanisme représentées aux figures 5b, 5c et 5d sont représentées.

Les jetons sont des cellules spécialisées échangées entre les différents joncteurs 7ⱼ à l'initiative d'un organe maître qui peut être l'un des joncteurs 7ᵢ, ou bien le module de gestion 4, ou bien le brasseur 2 lui-même. L'invention distingue trois types de jetons.

Le « jeton TOP » figure 5b est émis périodiquement par l'organe maître, avec une périodicité T, en diffusion générale vers tous les joncteurs dont l'égreneur de rang i possède au moins un arbre qui lui est associé. Ce jeton sert à synchroniser approximativement les émissions entre les différents joncteurs. Il convoie également pour chaque classe le « tour de parole ».

Le « jeton PAROLE » figure 5c est spécifique à chacune des classes identifiées précédemment. Il est envoyé par un des joncteurs dont l'égreneur de rang i a fini d'émettre avant la fin de l'intervalle T1 + T2 au joncteur suivant du tour de parole au sein de la classe considérée.

Le « jeton COLLECTE » figure 5d est émis par un des joncteurs ayant reçu le jeton TOP à la fin de la période T. Il est relayé de proche en proche dans tous les joncteurs concernés qui y inscrivent un indicateur sur leur besoin d'émettre pendant la période suivante ou de continuer à émettre la fin d'une PDU commencée. Finalement, le jeton est reçu et traité par l'organe maître.

Pour pallier l'inconvénient de l'art antérieur concernant le cas des serveurs de diffusion, tels que les serveurs BUS, réalisés par superposition de connexions point à point de chaque usager d'un groupe de diffusion vers le serveur et d'une connexion point à multipoint du serveur vers tous les usagers de ce même groupe, il est réalisé à l'intérieur du commutateur ATM un court-circuit entre ces diverses connexions, ce qui permet de créer une communication de type multipoint à multipoint dans laquelle le relayage des trames applicatives PDUs est totalement réalisé par les joncteurs, le serveur n'ayant plus pour rôle que la gestion des groupes de diffusion, c'est-à-dire des opérations nécessaires à l'arrivée d'un nouvel usager dans un groupe ou au départ d'un usager d'un groupe. Le processus de relayage de trames PDUs au niveau des joncteurs est rendu possible par la mise en oeuvre des processus d'arbitrage et du contrôle de flux décrits précédemment.

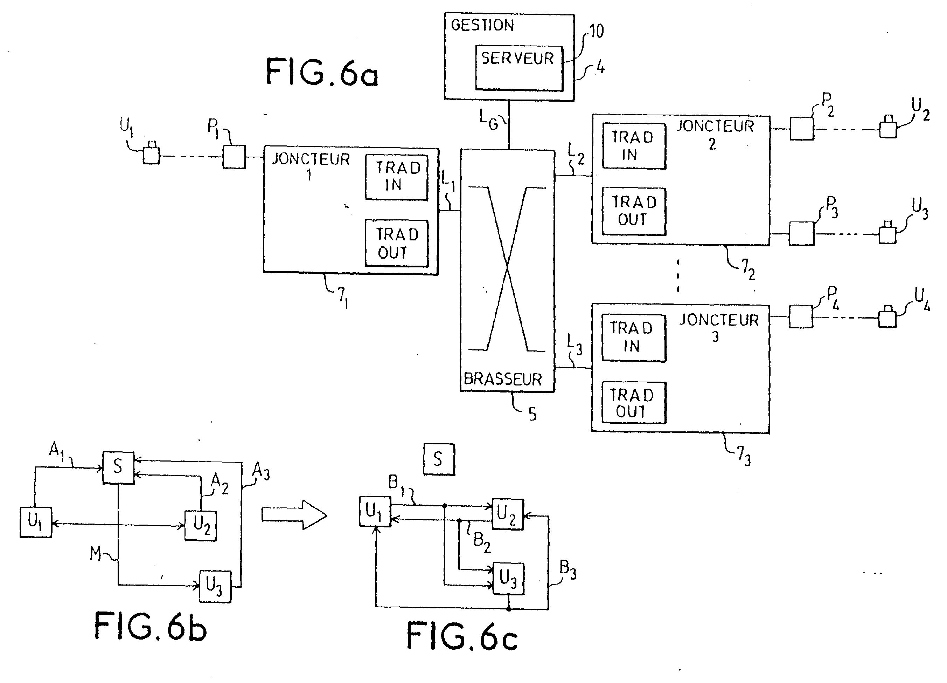

Le serveur de diffusion qui porte la référence 10 sur la figure 6a est un processus logiciel s'exécutant sur le module de gestion 4 du commutateur. En mode de fonctionnement selon l'art antérieur, le modèle de communication est celui représenté à la figure 6b qui illustre le cas de trois usagers appartenant à un groupe de diffusion. En mode de fonctionnement selon l'invention, le modèle de communication est celui représenté à la figure 6c, c'est-à-dire que les connexions point à point A1, A2, A3, et la connexion point à multipoint M sont remplacées par des connexions point à multipoint B1, B2, B3 de chaque usager du groupe vers tous les autres.

Cette modification du modèle de communication est rendue possible par une simple transformation des traductions d'entrée et de sortie mises en oeuvre dans la couche ATM et notées TRAD IN, TRAD OUT dans les joncteurs 7₁, 7₂, 7₃ de la figure 6a. En ce qui concerne les traductions d'entrée, des connexions point à point de type Ai, elles sont dans l'art antérieur, VLAi → (VLA'i, LG) où VLAi est l'identificateur de voie logique associé à Ai sur l'artère d'entrée, VLA'i est l'identificateur associé à cette même connexion dans le module de gestion et LG est l'identité de jonction brasseur du module de gestion, ce qui traduit le fait que toutes les trames PDU sont traitées par le serveur dans le module de gestion. Inversement, toutes les trames réémises par le serveur à destination des usagers d'un groupe de diffusion donné le sont avec une voie logique VLM caractéristique de la connexion point à multipoint M. Une traduction de sortie permet, dans chaque joncteur de sortie concerné, de transformer l'index de diffusion VLM en un identificateur de voie logique VLMi caractéristique de cette connexion sur l'artère de sortie, avec une éventuelle copie de chaque cellule si celle-ci doit sortir sur plusieurs ports P1, P2, ... Pp. Cette dernière traduction est donc de la forme VLM → (VLMP1, P1), (VLMP2, P2) (VLMPp, Pp).

Selon l'invention, les seules traductions modifiées par le court-circuit sont les traductions d'entrée qui deviennent VLAi → (VLM, L1, L2, L3, ..., Lq) où L1 à Lq désignent toutes les jonctions brasseurs concernées par la connexion M.

En mode de fonctionnement selon l'invention, le serveur de diffusion gère l'arrivée et le départ des usagers de la même façon que dans l'art antérieur puis détermine les traductions d'entrée à modifier pour aboutir au modèle de communication décrit ci-dessus.

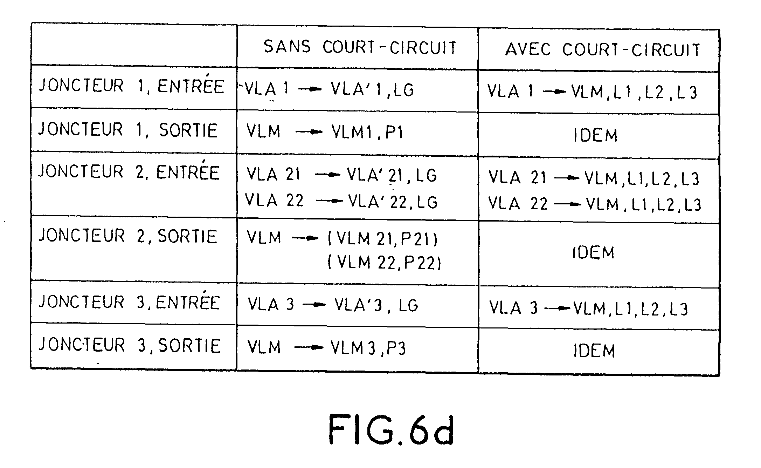

Le tableau de la figure 6d montre un exemple de traduction avec et sans court-circuit dans le cas d'un groupe de diffusion comportant quatre usagers ui, u21, u22 et u3 comme indiqué sur la figure 6a.

Nota 1 : sans restriction de généralité la figure 6b représente un cas où les connexions A1, A2, A3 sont unidirectionnelles ce qui n'est pas le cas pour le serveur BUS de LANE.

Nota 2 : les connexions A1, A2, A3 et M continuent à exister au moins en ce qui concerne la signalisation.

Nota 3 : selon les applications, il peut toujours être considéré ou non que le serveur lui-même fait partie du groupe d'usagers.

Enfin, au mécanisme d'arbitrage décrit précédemment peut être adjoint un troisième mécanisme permettant de pallier l'inconvénient de l'art antérieur cité précédemment dans le cas d'un routeur de trames IP est mis en oeuvre dans un module de gestion. Le procédé permet de réaliser à l'intérieur du commutateur ATM une véritable décentralisation de la fonction de relais IP en limitant le rôle du routeur au calcul des routes (art antérieur).

La figure 3c montre un cas où ce procédé est utilisable. Le routeur interne possède autant de LECs que d'ELANs qu'il connaît. Si l'usager uA appartenant à l'ELAN A veut envoyer une trame IP à destination de l'usager uB, il commence par utiliser les moyens de diffusion sur l'émulateur ELAN (serveur de diffusion BUS). Si la fonction routeur interne au commutateur a connaissance de l'existence de l'usager uB, la fonction LEC A de ce routeur, associé à l'émulation ELAN A, se déclare comme destinataire de toutes les trames IP à destination de l'usager uB. Par la suite l'usager uA utilise sa connexion ATM directe pour l'exécution de la fonction LEC A, selon le procédé habituel spécifié dans la norme LANE, pour émettre des trames à destination de l'utilisateur uB. Selon l'art antérieur, les trames doivent remonter jusqu'au routeur interne au module de gestion, pour les relayer vers l'utilisateur uB en utilisant la connexion ATM directe qui existe entre la fonction LEC B et l'utilisateur uB.

Le procédé suivant l'invention spécifie que pour toute trame applicative PDU arrivant sur une connexion directe concernant la fonction LEC A, le joncteur d'entrée examine sa première cellule et en extrait l'adresse IP du destinataire. Il parcourt alors une table de cache mise à jour grâce à des informations de routage provenant du module de gestion, et y trouve en regard de l'adresse IP un couple (voie logique, direction sortante). La voie logique est celle utilisée par la connexion directe entre LEC B et uB. La direction sortante est l'identifiant de la jonction brasseur concernée par cette connexion directe. Si le joncteur d'entrée ne trouve pas l'adresse IP recherchée dans la table de cache, il envoie une requête de mise à jour du cache au module de gestion. Les informations trouvées dans la table servant alors à la traduction de l'en-tête ATM de chaque cellule de la PDU concernée, on réalise ainsi une traduction dynamique, la table de traduction étant modifiée potentiellement lors du passage de chaque PDU. On établit donc ainsi un « court-circuit dynamique » entre deux connexions point à point.

## Revendications

1. Procédé de contrôle de flux au sein d'un commutateur ATM à architecture répartie et mémorisation en entrée consistant à distribuer sur chaque joncteur d'entrée (7ᵢ) un nombre déterminé n d'égreneurs (9₁... 9ₙ), un égreneur étant dédié aux flux de catégorie VBRnrt, abréviation anglo-saxonne pour Variable Bit Rate non real time, et réglé en fonction du débit moyen cumulé et les n-1 autres étant dédiés aux flux de catégorie ABR et UBR, **caractérisé en ce qu'**il consiste à associer à chaque connexion ABR ou UBR un arbre dont la racine est constituée par son joncteur d'entrée (7ᵢ) et les feuilles par les ports de sortie, puis à affecter cet arbre à un égreneur choisi en fonction du débit nominal de ses feuilles, l'égreneur étant réglé en fonction du débit disponible des feuilles de l'ensemble des arbres affectés à cet égreneur.

2. Procédé selon la revendication 1, **caractérisé en ce qu'**il consiste à affecter à chaque égreneur (9ᵢ) une première file d'attente P₁ fonctionnant en mode trame applicative PDU et une deuxième file d'attente P₂ fonctionnant en mode cellule.

3. Procédé selon la revendication 2, **caractérisé en ce qu'**il consiste à réserver la première file d'attente P₁ aux connexions multipoint à point et multipoint à multipoint.

4. Procédé selon l'une des revendications 1 à 3, **caractérisé en ce qu'**il consiste à affecter chaque égreneur (9ᵢ) à une classe définie par sa plage de fonctionnement, un égreneur (9ᵢ) de cette plage étant dans la même classe qu'un autre égreneur si les arbres respectifs associés à chacun des égreneurs ont au moins une feuille commune.

5. Procède selon la revendication 4, **caractérisé en ce qu'**il consiste à attribuer un « ordre de parole » aux égreneurs d'une même classe en limitant le droit de parole à l'intérieur d'un intervalle de temps T déterminé, partagé en trois intervalles de temps élémentaire T₁, T₂ et T₃ tel que T = T₁+T₂+T₃, le début d'une émission commençant dans l'intervalle T₁, la fin d'une émission ayant lieu dans l'intervalle T₁+T₂, le tour de parole de l'intervalle T suivant étant déterminé en fonction de désirs exprimés de chaque égreneur (9ᵢ) pendant l'intervalle T₃ en favorisant l'égreneur qui a suspendu l'émission d'une trame applicative PDU.

6. Procédé selon la revendication 5, **caractérisé en ce qu'**il consiste à désigner un joncteur « maître » pour l'émission d'un « jeton TOP » avec une périodicité T en diffusion générale vers tous les joncteurs dont l'égreneur de rang i possède au moins un arbre qui lui est associé, à faire émettre un jeton « parole » par un des joncteurs dont l'égreneur de rang i a fini d'émettre avant la fin de l'intervalle T1+T2 au joncteur suivant du tour de parole au sein de la classe considérée, et à faire émettre par chaque joncteur ayant reçu le jeton TOP à la fin de la période T pendant l'intervalle de temps T₃ un jeton « collecte » en direction du joncteur maître dans lequel est inscrit un indicateur indicatif de son besoin d'émettre pendant l'intervalle de temps T suivant.

7. Procédé selon la revendication 6, **caractérisé en ce qu'**il consiste à réaliser des communications en mode multipoint à multipoint en déportant la fonction de relayage de trame du serveur de diffusion (10) dans la couche ATM des joncteurs par modification des traductions d'entrée des connexions point à point (Ai), qui passent de VLAi → (VLA'i, LG) à VLAi → (VLM, L1, L2, L3, ..., Lq) où VLAi désigne l'identificateur de voie logique associée à Ai sur l'artère d'entrée, VLA'i désigne l'identificateur de voie logique associé à cette même connexion dans le module de gestion, LG désigne l'identité de la jonction brasseur du module de gestion, VLM désigne l'index de diffusion de la connexion point à multipoint M et L1, L2, ..., Lq désignent l'identité des jonctions brasseur concernées par la connexion M.

8. Procédé selon la revendication 6, **caractérisé en ce qu'**il consiste à réaliser des communications en mode multipoint à multipoint en déportant la fonction de relayage de trame d'un dispositif d'émulation de routage dans la couche ATM des joncteurs par l'examen de la première cellule de chaque trame PDU pour en extraire l'adresse IP du destinataire, par la recherche dans une table de cache d'un couple (voie logique direction sortante) en regard de l'adresse IP concernée, et par l'utilisation de la traduction obtenue dans toutes les cellules de la trame PDU, la table de cache étant mise à jour grâce à des informations de routage provenant de la fonction émulation de routage résidant dans le module de gestion, et à transmettre une requête de mise à jour du cache au module de gestion si l'adresse IP recherchée ne s'y trouve pas.

## Claims

1. Method of controlling streams in an ATM switch with distributed architecture and input storage comprising distributing over each input junctor (7ᵢ) a predetermined number n of shapers (9₁ ... 9ₙ), one shaper being dedicated to the streams of category VBRnrt, an acronym standing for Variable Bit Rate non-real-time, and adjusted according to the average aggregate bit rate and the other n-1 shapers being dedicated to the streams of category ABR and UBR, **characterized in that** it comprises associating with each ABR or UBR connection a tree structure, the root of which is formed by its input junctor (7ᵢ) and the leaves of which are formed by its output ports, then in assigning this tree structure to a shaper chosen according to the nominal bit rate of its leaves, the shaper being adjusted according to the available bit rate of the leaves of all of the tree structures assigned to this shaper.

2. Method according to Claim 1, **characterized in that** it comprises assigning to each shaper (9ᵢ) a first queue P₁ operating in protocol data unit PDU mode and a second queue P₂ operating in cell mode.

3. Method according to Claim 2, **characterized in that** it comprises reserving the first queue P₁ for the multipoint-to-point and multipoint-to-multipoint connections.

4. Method according to one of Claims 1 to 3, **characterized in that** it comprises assigning each shaper (9ᵢ) to a class defined by its operating range, a shaper (9ᵢ) of this range being in the same class as another shaper if the respective tree structures associated with each of the shapers have at least one common leaf.

5. Method according to Claim 4, **characterized in that** it comprises assigning an "order of speech" to the shapers of one and the same class, limiting the right to speech to within a predetermined time slot T, divided into three basic time slots T₁, T₂ and T₃, such that T = T₁+T₂+T₃, the start of a transmission beginning in the time slot T₁, the end of a transmission occurring in the time slot T₁+T₂, the turn for speech of the next time slot T being determined according to wishes expressed by each shaper (9ᵢ) during the time slot T₃, favouring the shaper that has suspended transmission of a protocol data unit PDU.

6. Method according to Claim 5, **characterized in that** it comprises appointing a "master" junctor for the transmission of a "TOP token" with an interval T, broadcast globally to all the junctors for which the shaper of rank i has at least one tree structure that is associated with it, in having a "speech" token transmitted by one of the junctors for which the shaper of rank i has finished transmitting before the end of the time slot T1+T2 to the next junctor with the turn to speak within the class concerned, and in having each junctor that has received the TOP token at the end of the period T during the time slot T₃ transmit a "collection" token to the master junctor in which there is entered an indicator indicating its need to transmit during the next time slot T.

7. Method according to Claim 6, **characterized in that** it comprises conducting communications in multipoint-to-multipoint mode by shifting the frame relay function from the broadcast server (10) to the ATM layer of the junctors by modifying the input translations of the point-to-point connections (Ai), that go from VLAi → (VLA'i, LG) to VLAi → (VLM, L1, L2, L3, ..., Lq), where VLAi designates the logical channel identifier associated with Ai on the input highway, VLA'i designates the logical channel identifier associated with this same connection in the management module, LG designates the identity of the cross-connect interface of the management module, VLM designates the broadcast index of the point-to-multipoint connection M and L1, L2, ..., Lq designate the identities of the cross-connect interfaces involved in the connection M.

8. Method according to Claim 6, **characterized in that** it comprises conducting communications in multipoint-to-multipoint mode by shifting the frame relay function from a routing emulation device to the ATM layer of the junctors by examining the first cell of each data unit PDU to extract from it the IP address of the recipient, by searching in a cache table for a pair (logical channel, outgoing direction) facing the IP address concerned, and by using the translation obtained in all the cells of the data unit PDU, the cache table being updated using routing information originating from the routing emulation function resident in the management module, and in transmitting a cache update request to the management module if the IP address sought is not there.

## Patentansprüche

1. Verfahren zur Flußsteuerung innerhalb eines ATM-Schalters mit verteilter Architektur und Speicherung am Eingang, das beinhaltet, an jeder Eingangsverbindungsleitung (7ᵢ) eine bestimmte Anzahl n von Formern (9₁ ... 9ₙ) zu verteilen, wobei ein Former den Flüssen der Kategorie VBRnrt, englische Abkürzung für Variable Bit Rate non real time, gewidmet und in Abhängigkeit vom mittleren kumulierten Durchsatz geregelt ist, und die n-1 anderen den Flüssen der Kategorie ABR und UBR gewidmet sind, **dadurch gekennzeichnet, daß**
es beinhaltet, jeder ABR- oder UBR-Verbindung einen Baum zuzuordnen, dessen Wurzel aus seiner Eingangsverbindungsleitung (7ᵢ) gebildet ist und die Flügel die Ausgangsports umfaßen, und dann diesen Baum einem Former zuzuordnen, der in Abhängigkeit vom Nenndurchsatz seiner Flügel gewählt wird, wobei der Former in Abhängigkeit vom verfügbaren Durchsatz der Flügel der Gesamtheit der diesem Former zugeteilten Bäume geregelt ist.

2. Verfahren nach Anspruch 1, **dadurch gekennzeichnet, daß**
das Verfahren umfaßt, jedem Former (9ᵢ) eine erste Warteschlange P₁, die im Modus eines applikativen PDU-Rahmens arbeitet, und eine zweite Warteschlange P₂ zuzuweisen, die im Zellen-Modus arbeitet.

3. Verfahren nach Anspruch 2, **dadurch gekennzeichnet, daß**
das Verfahren umfaßt, die erste Warteschlange P₁ für die Mehrfachpunkt-zu-Punkt-Verbindungen und Mehrfachpunkt-zu-Mehrfachpunkt-Verbindungen zu reservieren.

4. Verfahren nach einem der Ansprüche 1 bis 3,
**dadurch gekennzeichnet, daß**
das Verfahren umfaßt, jeden Former (9ᵢ) einer Klasse zuzuteilen, die durch ihren Betriebsbereich definiert ist, wobei ein Former (9ᵢ) dieses Bereichs in der gleichen Klasse ist wie ein anderer Former, wenn die jedem der Former zugeordneten Bäume mindestens einen gemeinsamen Flügel aufweisen.

5. Verfahren nach Anspruch 4, **dadurch gekennzeichnet, daß**
das Verfahren umfaßt, den Formern der gleichen Klasse ein "Rederecht" " zuzuweisen, indem das Rederecht innerhalb eines bestimmten Zeitintervalls T begrenzt wird, das in drei elementare Zeitintervalle T₁, T₂ und T₃ derart aufgeteilt ist, daß gilt T = T₁+T₂+T₃, wobei der Beginn einer Sendung im Intervall T₁ beginnt, das Ende einer Sendung im Intervall T₁+T₂ stattfindet, wobei der Redeturnus des folgenden Intervalls T in Abhängigkeit von Wünschen bestimmt wird, die von jedem Former (9ᵢ) während des Intervalls T₃ geäußert werden, indem der Former begünstigt wird, der das Senden eines applikativen PDU-Rahmens unterbrochen hat.

6. Verfahren nach Anspruch 5, **dadurch gekennzeichnet, daß**
das Verfahren umfaßt, eine "Master"-Verbindungsleitung für das Senden eines "TOP-Token" mit einer Periodizität T der allgemeinen Verbreitung an alle Verbindungsleitungen zu bezeichnen, deren Former des Rangs i mindestens einen ihm zugeordneten Baum besitzt, ein "Sprach"-Token von einer der Verbindungsleitungen aussenden zu lassen, deren Former des Rangs i vor dem Ende des Intervalls T1+T2 das Senden an die folgende Verbindungsleitung gemäß dem Redeturnus innerhalb der betrachteten Klasse beendet hat, und von jeder Verbindungsleitung, die das TOP-Token am Ende der Periode T während des Zeitintervalls T₃ empfangen hat, ein "Sammel"-Token in Richtung der Master-Verbindungsleitung senden zu lassen, in das ein Indikator eingetragen ist, der für ihren Sendebedarf während des folgenden Zeitintervalls T kennzeichnend ist.

7. Verfahren nach Anspruch 6, **dadurch gekennzeichnet, daß**
das Verfahren umfaßt, Kommunikationen im Mehrfachpunkt-zu-Mehrfachpunkt-Modus
durchzuführen, indem die Funktion der Rahmenweiterleitung des Verbreitungsservers (10) in die ATM-Schicht der Verbindungsleitungen durch Veränderung der Eingangsübersetzungen der Punktzu-Punkt-Verbindungen (Ai) verlagert wird, die von VLAi → (VLA'i,LG) zu VLAi → (VLM, L1, L2, L3, ..., Lq) übergehen, wobei VLAi den Logikkanal-Identifikator bezeichnet, der Ai auf der Eingangs-Haupttrasse zugeordnet ist, VLA'i den Logikkanal-Identifikator bezeichnet, der dieser gleichen Verbindung im Verwaltungsmodul zugeordnet ist, LG die Identität der Querschalter-Verbindung des Verwaltungsmoduls bezeichnet, VLM den Verbreitungsindex der Punkt-zu-Mehrfachpunkt-Verbindung M bezeichnet, und L1, L2, ..., Lq die Identität der Querschalter-Verbindungen bezeichnen, die von der Verbindung M betroffen sind.

8. Verfahren nach Anspruch 6, **dadurch gekennzeichnet, daß**
das Verfahren umfaßt, Kommunikationen im Mehrfachpunkt-zu-Mehrfachpunkt-Modus auszuführen, indem die Funktion der Rahmenweiterleitung einer Routing-Emulationsvorrichtung in der ATM-Schicht der Verbindungsleitungen durch die Untersuchung der ersten Zelle jedes PDU-Rahmens, um daraus die IP-Adresse des Empfängers zu extrahieren, durch die Suche in einer Cache-Tabelle eines Paars (Logikkanal ausgehende Richtung) gegenüber der betroffenen IP-Adresse, und durch die Verwendung der erhaltenen Übersetzung in allen Zellen des PDU-Rahmens verlagert wird, wobei die Cache-Tabelle mit Hilfe von Routing-Informationen aktualisiert wird, die von der Routing-Emulations-Funktion kommen, die sich im Verwaltungsmodul befindet, und eine Aktualisierungsforderung des Cache an das Verwaltungsmodul zu übertragen, wenn die gesuchte IP-Adresse dort nicht gefunden wird.
